# EUROPEAN PATENT APPLICATION

(11) **EP 4 201 189 A1**
(43) Date of publication of application: **28.06.2023**
(21) Application number: 21216825.6
(22) Date of filing: 22.12.2021
(51) Int. Cl.: A01D 41/127, A01D 41/14, A01D 43/08

(54) **HARVESTER HEADER WITH RADAR ARRANGEMENT**

(71) Applicant: CNH Industrial Belgium N.V., 8210 Zedelgem (BE)
(72) Inventor: LENAERTS, Bart, 3001 Heverlee (BE); MISSOTTEN, Bart, 3020 Herent (BE); GUERZONI, Giorgio, 41034 Finale Emilia (MO) (IT); SIRIGNANO, Emilio, 80030 Visciano (NA) (IT); VITETTA, Giorgio, 41121 Modena (MO) (IT)
(74) Representative: CNH Industrial IP Department

(57) **Abstract**

A header (18) for an agricultural harvester (10) comprises a header frame, a cutting or pick-up unit (34) for taking a crop from a field and a radar sensor arrangement (100) for monitoring the field in front of the header (18), the radar sensor arrangement comprising at least a first radar sensor (110), mounted to the header (18) and configured to emit radio waves along a downward direction towards the field in front of the cutting or pick-up unit and an inward direction towards a central longitudinal axis of the agricultural harvester. A controller, operatively coupled to the radar sensor arrangement (100) is configured to control the header based on the sensor signals, the signals are processed to determine a ground or crop profile.

## Description

### TECHNICAL FIELD

The present invention relates to a header for an agricultural harvester, the header comprising a radar sensor for monitoring a field in front of the header and a controller, operatively coupled to the radar sensor and configured to adjust the header or the agricultural harvester based on signals from the radar sensor. The present invention further relates to an agricultural harvester comprising such a header.

### BACKGROUND

Combine harvesters are complex agricultural machines that drive over a field to harvest grain crops, while separating the grain ears from the plant and the grain kernels from the ears. At the front of the combine harvester, a header is installed that is configured to cut the crop, take it from the field, and feed it into a crop processing system that separates the grain kernels from other parts of the harvested plants.

Forage harvesters are used for harvesting a large variety of grain crops and non-grain crops. Like in a combine harvester, a header mounted at the front of the forage harvester cuts the crop and takes it in. The harvested crop is then cut into smaller pieces and blown into a trailer or truck driving in close proximity to the forage harvester.

For various reasons, many operating parameters of the header and the harvester itself are manually or automatically adjusted during the harvesting process. For example, a header height may be controlled to maintain a constant distance between the header and the ground or between the header and the top of the crop, a drive speed of the harvester may be adapted to the circumstances in the field, or a threshing and cleaning section of the combine harvester may be controlled in dependence of the amount of crop that is taken in per second. A position and rotational speed of a reel on a combine harvester header may be adjusted when approaching fallen crops.

For automatically adjusting such and many other operating parameters it may be useful for the automatic control algorithms to continuously receive information about, e.g., the ground profile, crops, or obstacles in front of the header. When adjusting operational parameters manually, it may be useful for the operator to have such information readily available in order to not have to rely on personal judgement of what is directly observable with his/her own eyes only.

As described in, e.g, the European patent application published as EP 3 011 824 A1, it is known to use sensors equipped to emit and receive sound and/or radio waves. The sensors are mounted such that they emit the sound and/or radio waves in a direction that is generally perpendicular to the ground in the path of the header. In an embodiment the sound and/or radio waves are directed in the forward driving direction of the harvester, under an angle with the ground. To obtain useful information about the field and crop across the full working width of the harvester, a plurality of sensors is provided along the width of the header, or a single sensor is provided at the end of a long arm that extends from the top of the driver's cabin. Part of the emitted sound and/or radio waves is reflected by the field and detected by the sensors. The sensor signals are then processed to determine a ground profile or crop height, and/or rocks and other foreign objects.

While this approach has proven to be successful, there is a need for even more accurate results and more compact and mechanically less complex sensor arrangements. It is an aim of the present invention to address one or more disadvantages associated with the prior art.

### SUMMARY OF THE INVENTION

According to an aspect of the invention this aim has been fulfilled by providing a header for an agricultural harvester comprising a header frame, at least one cutting or pick-up unit, and a radar sensor arrangement. The cutting or pick-up unit is carried by the header frame and provided for taking a crop from a field. The radar sensor arrangement is configured for monitoring the field in front of the header and comprises at least a first radar sensor, mounted to the header and configured to emit radio waves along a downward direction towards the field in front of the cutting or pick-up unit and an inward direction towards a central longitudinal axis of the agricultural harvester, under an angle (β) of about 30°-60° with a horizontal bottom plane of the header, measured in a front view of the header. Preferably, the angle (β) is about 40°-50°, for example 45°.

By emitting the radio waves inwards instead of straight down or forward in the direction of travel, several new advantages are obtained. Firstly, it allows for an easier construction of the sensor arrangement because it may now be sufficient to only use one or two radar sensors, e.g., mounted to one or both lateral ends of the header. For smaller headers, typically having a width of about 5 meter one sensor may be enough. Wider headers having a width of, e.g., about 10 meter may need two sensors mounted at opposite lateral ends of the header. No complex mounting structures, such as disclosed in EP 3 011 824 A1 are needed. When using 2D or 3D radar sensors, analysing the range and the angle of arrival of the reflected radio waves allows for the reconstruction of a planar or volumetric cross section of the field indicating both the local ground level and crop level. Alternatively, arrays of 1D radar sensors or scanning 1D radar sensors may be used to obtain similar results. In the area furthest away from the sensors, often nearer to the centre of the header, a possible reduced measurement accuracy may be compensated by having an area of overlap between the fields of view of two radar sensors. The two radar sensors may emit their radio waves alternatingly to facilitate distinguishing the source of detected return signals. Other measures for preventing interference may, e.g., involve the use of radio waves of slightly different frequencies. For example, one radar sensor may operate at a frequency between 76 and 77 GHz, while the other radar sensor operates at a frequency between 77 and 78 GHz.

In an embodiment, the radar sensor arrangement may be arranged such that, in use, radio waves emitted by a first and a second radar sensor are reflected by the field and/or the crop in an area of overlap, the first and the second radar sensor both receiving reflected radio waves emitted by another one of the first and the second radar sensor. This way, the measurement accuracy in the area of overlap may be increased even further.

In embodiments of the invention, the radar sensor(s) is/are configured to emit the radio waves in the downward direction under an angle (α) of about 70°-90° with a horizontal bottom plane of the header, measured in a side view of the header. When looking slightly ahead of the radar sensors in the direction of travel, there is more time for the operator and/or an automated control process to adapt the operation of the header and/or the harvester between the moment of detecting the ground or crop profile and arriving at the corresponding position in the field. This further reduces the need to mount the radar sensors to large mechanical constructions that extend too far in front of the header.

Additionally, the radar sensor(s) may be movably mounted to the header for adjusting a direction of the emitted radio waves. Such adjustment may, e.g., serve to change the angles (α, β) at which the radio waves approach the field. Alternatively, or additionally, the change of direction may serve to adjust the position of the target area of the radar sensor relative to the cutting or pick-up unit. The adjustment of the direction of the emitted radio waves, may be achieved using electronic beam steering, which brings the advantage that it does not require any moving parts to realise the adjustment.

The header may further comprise a position sensor arrangement for determining a position and/or an orientation of the header relative to the field, and a controller configured to adapt the direction of the emitted radio waves in dependence of the position and/or the orientation of the header. This, e.g., makes it possible to keep the radar sensor arrangement focussed on the desired position in the field when the header is tilted, raised, or lowered. If a detailed field map is available, the header position measurement may be used to pre-emptively adjust the direction of the emitted radio waves before a mapped ditch or other obstacle is reached.

Mechanical and electronic beam steering may further be used for subsequently scanning different smaller portions of a wider field of view of the respective radar sensor, thereby allowing to scan such smaller portions at a higher resolution. For example, a broader field scan may first be performed to determine a narrower field of interest. After that, the field of interest may be scanned at a higher resolution to accurately determine the local ground and crop profile or detect obstacles. Higher resolution profile scans may be made by sequentially scanning multiple portions of the wider field of view.

Headers according to the invention may comprise at least one structural beam, mounted to the header frame and at least partly extending in front of the cutting unit, the radar sensor being mounted on the at least one structural beam. As seen in the prior art, two radar sensors may be mounted to a long structural beam extending along the width of the header. Such an arrangement is, however, not preferred. In a more preferred example, two structural beams may be mounted to the respective lateral ends of the header with one radar sensor being mounted to the distal ends of each structural beam. The structural beams may have a variable length, such as through a telescopic construction. When having a variable length, the structural beams can be retracted during transportation or extended and retracted for adjusting the position of the target area of the radar sensor relative to the cutting or pick-up unit. The structural beam may further be movably mounted to the header frame, e.g. by pivotal or translational movement. Again, such movement may be useful for adjusting the radar sensor position during use and/or for safely storing the structural beam and the radar sensor during transport.

Where possible, the at least two radar sensors are positioned such that their combined field of view covers the full width of the header. In some embodiments, the radar sensor arrangement may further comprise a third radar sensor and a fourth radar sensor, both mounted in front of the cutting or pick-up unit and configured to emit radio waves along a downward direction towards the field and an inward direction towards each other, under an angle (β) of about 30°-60° with a horizontal bottom plane of the header, measured in a front view of the header. With these additional sensors, it is possible to monitor the complete field in front of wider headers too. Such wider headers may, e.g., comprise a split reel. A central support beam may extend between the two reel portion and one or more of the radar sensors may be mounted to that central support beam. Mounting the radar sensors in such a way avoids the need to install a large cross beam that spans the full width of the header (as, e.g., in Fig. 5 of EP 3 011 824 A1).

In a special embodiment the radar sensor arrangement further comprises at least one outward looking radar sensor, mounted to the header and configured to emit radio waves along a downward direction towards the field and an outward direction away from the header, under an angle (β) of about 30°-60° with a horizontal bottom plane of the header, measured in a front view of the header. With such an outward looking radar sensor, it is possible to obtain a ground profile and/or a crop profile of a part of the field that has not been harvested yet. These profiles may be stored in a georeferenced map. During a subsequent pass of the harvester over the mapped part of the field, a harvester controller can predict the upcoming ground and/or crop profile based on location information obtained using, e.g., GPS sensors and the profile information as stored in the georeferenced map. This allows the operator or an automated control system to adapt, e.g., the header height accordingly.

According to a further aspect of the invention, an agricultural harvester is provided comprising a header as described above. The agricultural harvester may further comprise a controller, operatively coupled to the radar sensor arrangement and configured to control the header or the agricultural harvester based on signals from the radar sensor arrangement. The agricultural harvester may, e.g., be a combine harvester or a forage harvester.

### BRIEF DESCRIPTION OF THE DRAWINGS

Embodiments of the invention will now be described by way of example with reference to the accompanying drawings.
Figure 1 shows a combine harvester wherein the radar sensor arrangement according to the invention may be advantageously used.
Figure 2 shows a front view of a combine harvester according to an embodiment of the invention.
Figure 3 shows a front view of a combine harvester according to another embodiment of the invention.
Figure 4 shows a side view of the combine harvester of Figure 2 or 3.
Figure 5 shows a combine harvester according to a further embodiment of the invention.

### DETAILED DESCRIPTION

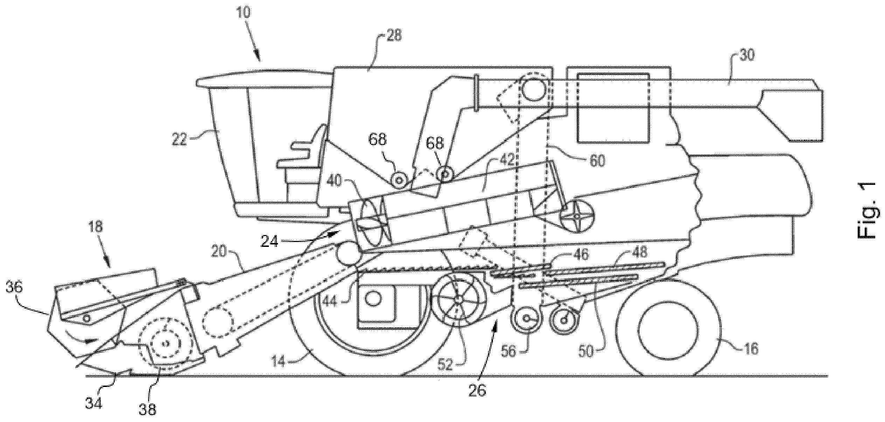

Figure 1 shows an agricultural harvester in the form of a combine harvester 10, which generally includes front and rear round engaging wheels 14, 16, a header 18, a feeder 20, an operator cabin 22, a threshing and separation system 24, a cleaning system 26, a grain tank 28 and an unloading tube 30. It should be appreciated that while the agricultural harvester is shown as a combine harvester 10, the agricultural harvester according to the present invention may be embodied by any construction that allows for crop material to be harvested, such as a conventional combine (which does not have a rotor), rotary combine, hybrid combine, chopper harvester, forage harvester, baler, etc.

A header 18 is mounted to the front of the combine harvester 10 and includes a cutter bar 34 for severing crops from a field during forward motion of the combine. A rotatable reel 36 feeds the crop into the header 18, and a double auger 38 feeds the severed crop laterally from each side towards the feeder 20. The feeder 20 conveys the severed crop to the threshing and separating system 24.

The threshing and separating system 24 is of the axial-flow type and comprises a threshing rotor 40 at least partially located and rotatable within a threshing concave 42. The threshing concave may take the form of a perforated concave. Grain from the severed crop is threshed and separated from the MOG by the action of the threshing rotor 40 within the threshing concave 42. Larger elements of MOG, such as stalks and leaves do not pass through the perforations in the threshing concave 42 and are discharged from the rear of the combine harvester 10. Grain and smaller elements of MOG (small MOG henceforth), such as chaff, dust and straw are small enough to pass through the perforations in the threshing concave 42 and are thence discharged from the threshing and separation system 24.

Grain and small MOG that has successfully passed the threshing and separating system 24 falls onto a preparation pan 44 and is conveyed towards the cleaning system 26. The cleaning system comprises a series of sieves and a cleaning fan 52. The series of sieves includes a pre-cleaning sieve 46, an upper (or chaffer) sieve 48 and a lower (or shoe) sieve 50. The cleaning fan 52 generates an airflow through the sieves 46, 48, 50 that impinges on the grain and small MOG thereon. The small MOG is typically lighter than the grain and is therefore separated from the grain as it becomes airborne. The small MOG is subsequently discharged from the combine harvester 10 via a straw hood.

The preparation pan 44 and pre-cleaning sieve 46 oscillate in a fore-to-aft manner to transport the grain and small MOG to the upper surface of the upper sieve 48. The upper sieve 48 is arranged vertically above the lower sieve 50 and oscillates in a fore-to-aft manner too, such that the grain and small MOG are spread across the two sieves 48, 50, while also permitting cleaned grain to pass through openings in the sieves 48, 50 under the action of gravity.

Cleaned grain falls to a clean grain auger 56 that is positioned below and in front of the lower sieve 50 and spans the width of the combine harvester 10. The clean grain auger 56 conveys the cleaned grain laterally to a vertical grain elevator 60, which is arranged to transport the cleaned grain to the grain tank 28. Once in the grain tank 28, grain tank augers 68 at the bottom of the grain tank convey the cleaned grain laterally within the grain tank 28 to an unloading tube 30 for discharge from the combine harvester 10.

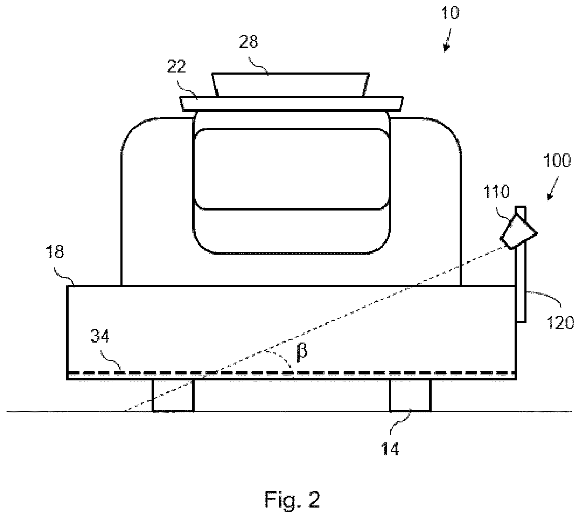

Figure 2 shows a front view of a combine harvester 10 according to an embodiment of the invention. It is noted that, although the invention will be explained below with reference to a combine harvester 10, the invention may be equally useful when used on a header for other agricultural harvesters such as forage harvesters and agricultural balers. The combine harvester 10 of Figure 2 comprises a header 18 with a header frame and a cutting unit in the form of a cutter bar 34, and a radar sensor arrangement 100. The radar sensor arrangement 100 is configured for monitoring the field in front of the header and comprises a first radar sensor 110, mounted to the header 18 on a support beam 120 and configured to emit radio waves along a downward direction towards the field in front of the cutter bar 34 and an inward direction towards a central longitudinal axis of the agricultural harvester 10, under an angle (β) of about 30°-60° with a horizontal bottom plane of the header 18. Preferably, the angle (β) is about 40°-50°, for example 45°.

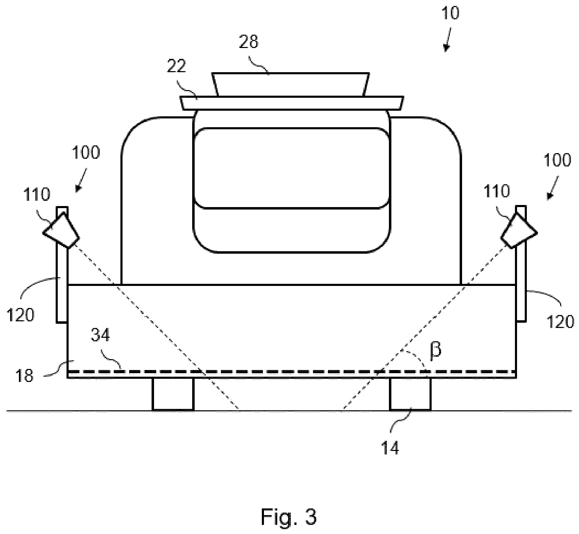

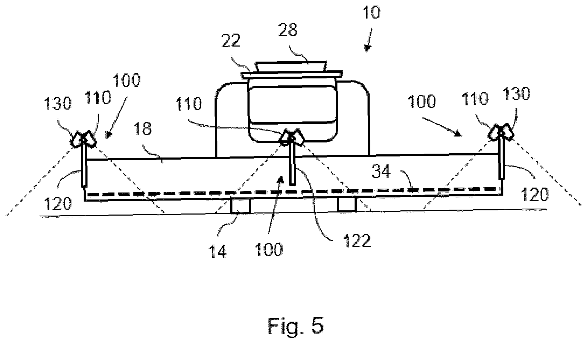

By emitting the radio waves inwards instead of straight down or forward in the direction of travel, several new advantages are obtained. Firstly, it allows for an easier construction of the sensor arrangement 100 because it may now be sufficient to only use one or two radar sensors 110, e.g., mounted to one or both later ends of the header 18. For smaller headers 18, typically having a width of about 5 meter, one radar sensor 110 may be enough. Wider headers 18 having a width of, e.g., about 10 meter may need two radar sensors 110 mounted at opposite lateral ends of the header 18. In, e.g., the embodiment shown in Figure 2, the header 18 is not much wider than the combine harvester 10 itself and the use of one radar sensor 110 may be enough to obtain useful results. However, as shown in Figure 3, a second radar sensor 110 provided at the opposite lateral end of the header 18 may be used to improve the accuracy of the radar sensor arrangement 100. On even wider headers 18, as for example shown in Figure 5, further radar sensors 10 may be mounted in more central locations between the lateral ends of the header 18 for ensuring that the total field of view of the radar sensor arrangement 100 covers the full width of the header 18.

When using 2D or 3D radar sensors 110, analysing the range and the angle of arrival of the reflected radio waves allows for the reconstruction of a planar or volumetric cross section of the field indicating both the local ground level and crop level. Alternatively, arrays of 1D radar sensors or scanning 1D radar sensors may be used to obtain similar results. In the area furthest away from the radar sensors 110, often nearer to the centre of the header, a possible reduced measurement accuracy may be compensated by having an area of overlap between the fields of view of two radar sensors 110. The two radar sensors 110 may emit their radio waves alternatingly to facilitate distinguishing the source of detected return signals. Other measures for preventing interference may, e.g., involve the use of radio waves of slightly different frequencies. For example, one radar sensor 110 may operate at a frequency between 76 and 77 GHz, while the other radar sensor operates at a frequency between 77 and 78 GHz.

In an embodiment, the radar sensor arrangement 100 may be arranged such that, in use, radio waves emitted by a first and a second radar sensor 110 are reflected by the field and/or the crop in an area of overlap, the first and the second radar sensor 110 both receiving reflected radio waves emitted by another one of the first and the second radar sensor 110. This way, the measurement accuracy in the area of overlap may be increased even further.

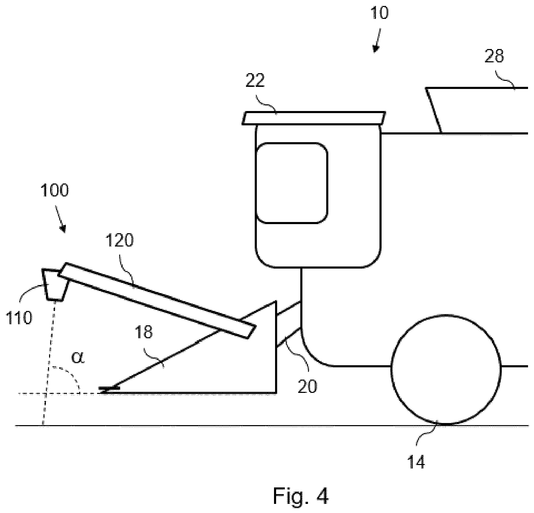

Figure 4 shows a side view of the combine harvester 10 of Figure 2 or 3. In embodiments of the invention, as illustrated in Figure 4, the radar sensors 110 are configured to emit the radio waves in the downward direction under an angle (α) of about 70°-90° with a horizontal bottom plane of the header 18. By looking slightly ahead of the radar sensors 110 in the direction of travel, there is more time for the operator and/or an automated control process to adapt the operation of the header 18 and/or the harvester 10 between the moment of detecting the ground or crop profile and arriving at the corresponding position in the field. This further reduces the need to mount the radar sensors 110 to large mechanical constructions that extend too far in front of the header 18.

Additionally, the radar sensors 110 may be movably mounted to the header 18 for adjusting a direction of the emitted radio waves. The radar sensor 110 may be movable, e.g., by an electric actuator that pivots and/or slides the radar sensor 110 relative to the support beam 120 it is mounted to. Alternatively, the support beam 120 itself may be telescopically extendable or pivotable and/or slidable relative to the header frame. Such adjustments, also called mechanical beam steering, may, e.g., serve to change the angles (α, β) at which the radio waves approach the field. Alternatively, or additionally, the change of direction may serve to adjust the position of the target area of the radar sensors 110 relative to the cutter bar 34.

The adjustment of the direction of the emitted radio waves, may further be achieved using electronic beam steering, which brings the advantage that it does not require any moving parts to realise the adjustment. Electronic beam steering typically involves changing the relative phases of the radio wave signals emitted by different antennas in a 2D or 3D radar sensor 110. By adjusting the relative phases of the emitted signals, the overall direction of the resulting wave front can be steered into the desired direction. Electronic beam steering may be faster, cheaper, and more durable than mechanical beam steering because it can be implemented in software and/or electronic circuitry and does not require any moving parts.

Electronic or mechanical beam steering may be used for various reasons. The header may, for example comprise a position sensor arrangement for determining a position and/or an orientation of the header 18 relative to the field. A controller may then be configured to adapt the direction of the emitted radio waves in dependence of the position or the orientation of the header 18. This makes it possible to keep the radar sensor arrangement 110 focussed on the desired position in the field when the header 18 is tilted, raised, or lowered. If a detailed field map is available, the header position measurement may be used to pre-emptively adjust the direction of the emitted radio waves before a mapped ditch or other obstacle is reached.

Beam steering may further be used for subsequently scanning different smaller portions of a wider field of view of the respective radar sensor 110, thereby allowing to scan such smaller portions at a higher resolution. For example, a broader field scan may first be performed to determine a narrower field of interest. After that, the field of interest may be scanned at a higher resolution to accurately determine the local ground and crop profile or detect obstacles. Higher resolution profile scans may be made by sequentially scanning multiple portions of the wider field of view.

In the embodiment of Figure 5, the radar sensor arrangement 100 comprises two sets of radar sensors 110, configured to emit radio waves along a downward direction towards the field and an inward direction towards each other, under an angle (β) of about 30°-60° with a horizontal bottom plane of the header 18. With these additional sensors, it is possible to monitor the complete field in front of this wider header 18 too. In addition to two radar sensors 110 mounted to support beams 120 at the lateral ends of the header 18, as already shown in the embodiment of Figure 3, the radar sensor arrangement 100 of the embodiment of Figure 5 comprises two radar sensors 110 that are mounted to a central support beam 122. The radar sensors 110 mounted to the central support beam 122 are configured to emit radio waves along a downward direction towards the field and an outward direction away from the central longitudinal axis of the combine harvester 10, under an angle (β) of about 30°-60° with a horizontal bottom plane of the header 18. In some embodiments, such wider headers 18 as shown in Figure 5 may, e.g., comprise a split reel with two reel portions. The central support beam 122 may extend between the two reel portions.

The radar sensor arrangement of the combine harvester 10 shown in Figure 5 further comprises two outward looking radar sensors 130, mounted to the outer support beams 120 and configured to emit radio waves along a downward direction towards the field and an outward direction away from the header 18, under an angle (β) of about 30°-60° with a horizontal bottom plane of the header 18. With such outward looking radar sensors 130, it is possible to obtain ground and crop profiles of parts of the field that have not been harvested yet. These profiles may be stored in a georeferenced map. During a subsequent pass of the harvester 10 over the mapped part of the field, a harvester controller can predict the upcoming ground and crop profiles based on location information obtained using, e.g., GPS sensors and the profile information as stored in the georeferenced map. This allows the operator or an automated control system to adapt, e.g., the header height accordingly.

## Claims

1. A header (18) for an agricultural harvester (10), the header (18) comprising:
a header frame,
at least one cutting or pick-up unit (34) for taking a crop from a field, the cutting or pick-up unit (34) being carried by the header frame, and
a radar sensor arrangement for monitoring the field in front of the header (18), the radar sensor arrangement comprising at least a first radar sensor, mounted to the header (18) and configured to emit radio waves along a downward direction towards the field in front of the cutting or pick-up unit and an inward direction towards a central longitudinal axis of the agricultural harvester, under an angle (β) of about 30°-60° with a horizontal bottom plane of the header (18), measured in a front view of the header (18).

2. A header (18) as claimed in claim 1, wherein the radar sensor arrangement further comprises a second radar sensor, mounted to the header (18) and configured to emit radio waves along a downward direction towards the field in front of the cutting or pick-up unit and an inward direction towards the first radar sensor, under an angle (β) of about 30°-60° with a horizontal bottom plane of the header (18), measured in a front view of the header (18).

3. A header (18) as claimed in claim 1 or 2, wherein the first and/or the second radar sensor are 2D or 3D radar sensors.

4. A header (18) as claimed in claim 2, wherein the radar sensor arrangement is arranged such that, in use, radio waves emitted by the first and the second radar sensor are reflected by the field and/or the crop in an area of overlap, the first and the second radar sensor both receiving reflected radio waves emitted by another one of the first and the second radar sensor.

5. A header (18) as claimed in any preceding claim, wherein at least the first radar sensor is configured to emit the radio waves in the downward direction under an angle (α) of about 70°-90° with a horizontal bottom plane of the header (18), measured in a side view of the header (18).

6. A header (18) as claimed in any preceding claim, wherein at least the first radar sensor is movably mounted to the header (18) for adjusting a direction of the emitted radio waves.

7. A header (18) as claimed in any preceding claim, wherein the radar sensor arrangement is configured to configure a direction of the emitted radio waves using electronic beam steering.

8. A header (18) as claimed in claim 6 or 7, further comprising a position sensor arrangement for determining a position and/or an orientation of the header (18) relative to the field, and a controller configured to adapt the direction of the emitted radio waves in dependence of the position and/or the orientation of the header (18).

9. A header as claimed in any preceding claim, further comprising at least one structural beam, mounted to the header frame and at least partly extending in front of the cutting unit, and wherein at least the first radar sensor is mounted on the at least one structural beam.

10. A header (18) as claimed in claim 9, wherein the structural beam has a variable length.

11. A header (18) as claimed in claim 9 or 10, wherein the structural beam is movably mounted to the header frame.

12. A header (18) as claimed in claim 2, wherein the first radar sensor is mounted to a first structural beam that is mounted at a left side of the header (18) and the second radar sensor is mounted to a second structural beam that is mounted at a right side of the header (18).

13. A header (18) as claimed in claim 2, 4, or 12, wherein the radar sensor arrangement further comprises a third radar sensor and a fourth radar sensor, both mounted in front of the cutting or pick-up unit (34) and configured to emit radio waves along a downward direction towards the field and an inward direction towards each other, under an angle (β) of about 30°-60° with a horizontal bottom plane of the header (18), measured in a front view of the header (18).

14. A header as claimed in any of the preceding claims, wherein the radar sensor arrangement further comprises at least one outward looking radar sensor, mounted to the header (18) and configured to emit radio waves along a downward direction towards the field and an outward direction away from the header (18), under an angle (β) of about 30°-60° with a horizontal bottom plane of the header (18), measured in a front view of the header (18).

15. An agricultural harvester (10) comprising a header (18) as claimed in any of the claims 1 to 14, the agricultural harvester (10) further comprising a controller, operatively coupled to the radar sensor arrangement and configured to control the header (18) or the agricultural harvester (10) based on signals from the radar sensor arrangement.
